Europäisches Patentamt

**European Patent Office**

Office européen des brevets

(19)

(11) Veröffentlichungsnummer: **0 003 582**
**B1**

(12)

# EUROPÄISCHE PATENTSCHRIFT

(45) Veröffentlichungstag der Patentschrift:
27.01.82

(51) Int. Cl.³: **C 08 L 1/26**, C 04 B 13/24,
C 09 D 3/00

(21) Anmeldenummer: 79100328.8

(22) Anmeldetag: 05.02.79

(54) Verfahren zur Herstellung einer stabilen Celluloseäther-Suspension und deren Verwendung.

(30) Priorität: 13.02.78 DE 2805907

(43) Veröffentlichungstag der Anmeldung:
22.08.79 Patentblatt 79/17

(45) Bekanntmachung des Hinweises auf die Patenterteilung:
27.01.82 Patentblatt 82/4

(84) Benannte Vertragsstaaten:
BE DE FR GB NL SE

(73) Patentinhaber: HOECHST AKTIENGESELLSCHAFT,
Postfach 80 03 20, D-6230 Frankfurt/Main 80 (DE)

(72) Erfinder: Girg, Friedrich, Wallbacher Strasse 36,
D-6271 Idstein-Wörsdorf (DE)
Erfinder: Knittel, Volker, Dr., Heinrich-Zille-Strasse 36,
D-6200 Wiesbaden-Schierstein (DE)

(56) Entgegenhaltungen:
AU-A-4528/66
US-A-2 778 740
US-A-2 342 581
US-A-3 483 007
US-A-3 493 148
IBM TECHNICAL DISCLOSURE BULLETIN
Vol. 19, Nr. 9, Februar 1977,
D. L. GORTON et al.: »Viscosity
stabilizer for high adhesion
metallizing pastes«, Seite 3386
CHEMICAL ABSTRACTS, Vol. 89, Nr.
2, 10. Juli 1978, Seite 79
Zusammenfassung Nr. 7683w,
Columbus, Ohio, USA

**0 003 582**

Verfahren zur Herstellung einer stabilen Celluloseäther-Suspension und deren Verwendung

Die Erfindung betrifft ein Verfahren zur Herstellung einer stabilen, wäßrigen, elektrolythaltigen Celluloseäther-Suspension und deren Verwendung.

Zur Vermeidung von Staubbildung beim Einmischen von pulver- oder granulatförmigen Celluloseäthern in z. B. vorgelegte Baustoffgemische oder Farbansätze, aber auch zur Erzielung einer möglichst genauen Dosierung des Celluloseäthers zum vorgelegten Stoff oder einer schnellen Verteilung des Celluloseäthers im vorgelegten Stoff bestehen im wesentlichen zwei bekannte Möglichkeiten des Vorgehens:

— der Celluloseäther wird in wäßriger Lösung eingesetzt oder
— der Celluloseäther wird in einem organischen Lösemittel oder einem Gemisch aus organischen Lösemitteln, gegebenenfalls auch bei Anwesenheit bestimmter Mengen Wasser, gelöst oder suspendiert.

Diese bekannten Verfahren weisen jedoch einige Nachteile auf. Wäßrige Celluloseäther-Lösungen oder Lösungen von Celluloseäthern in organischen Lösemitteln können nur bis zu relativ niedrigen Konzentrationen (etwa 2- bis 4%ige Lösungen) hergestellt werden, wodurch sich z. B. Probleme hinsichtlich des Transports oder der Lagerung der großen Flüssigkeitsmengen ergeben. Die Celluloseäther-Lösungen zeigen außerdem insbesondere im oberen Konzentrationsbereich eine zähklebrige Konsistenz, eine Eigenschaft, die z. B. Anhaftung der Lösung an Behälterwänden, Rohrleitungen oder Pumpen zur Folge hat und dadurch bedingt auch eine mühevolle Reinigung dieser Gerätschaften. Häufig ist der Verbraucher darüber hinaus gerade daran interessiert, zwar die positiven Eigenschaften der genannten Lösungen oder Dispersionen zu nutzen, möchte aber beispielsweise möglichst wenig Flüssigkeit in seinen vorgelegten Stoff einbringen. Bei Einsatz von organischen Flüssigkeiten als Löse- oder Suspendiermittel treten zusätzliche Nachteile durch deren teilweise schnelle Verdunstung und die damit einhergehenden Konzentrationsschwankungen, ihren physiologischen Einfluß beim Menschen und ihre teilweise ungeeignete spezifische Dichte auf; durch die letztgenannte Eigenschaft sind die Celluloseäther dann beispielsweise spezifisch dichter und sedimentieren in der Suspension und sind nur mit Schwierigkeiten wieder aufrührbar. Außerdem sind organische Lösemittel insbesondere beim Einsatz von Celluloseäthern auf den Anwendungsgebieten für Mörtel- oder Betonmischungen ungeeignet, weil sie oftmals das Abbindeverhalten dieser Mischungen in ungeeigneter Weise beeinflussen.

Zum Verhalten von Celluloseäther-Lösungen beim Zusetzen von Fremdstoffen zur Beeinflussung der Löslichkeit sind beispielsweise die folgenden Beobachtungen aus dem Stand der Technik bekannt geworden:

In der DE-PS 527 197 wird ein Verfahren zur Darstellung nicht-quellbarer oder schwer löslicher Alkylcellulosederivate beschrieben, bei dem man den wäßrigen Lösungen von Alkylcellulosen solche wasserunlöslichen Stoffe zusetzt, die mit der wäßrigen Lösung Kolloide bilden können, ohne sich jedoch mit den Alkylcellulosen chemisch umzusetzen. Als wasserunlösliche Stoffe werden Latex (Kautschukmilch), Phenolformaldehydkunstharz, Leinöl, Benzylalkohol, Gerbstoffe und Äthylcellulose aufgeführt. Das Anwendungsgebiet der derart nicht-quellbar oder schwer löslich gemachten Alkylcellulosen soll die Herstellung von Gebilden für Filme, Kunstfäden und plastische Massen sein.

Die stabile Celluloseäther-Komposition gemäß der US-PS 2 947 645 weist einen pH-Bereich von etwa 5 bis 9 auf und enthält wasser-unlösliche, alkali-lösliche Celluloseäther. Diese Komposition soll geeignet sein, bestimmte Gebilde daraus herzustellen oder Beschichtungen damit zu erzeugen, wobei das Lösungsmittel entfernt wird. Bei der Herstellung dieser Komposition wird wie folgt verfahren: Der wasser-unlösliche, alkali-lösliche Celluloseäther wird in einer etwa 0,5- bis 4,0%igen wäßrigen Alkalilösung vollständig aufgelöst und anschließend wird diese Lösung mit so viel Säure versetzt, daß sich ein pH-Wert von etwa 5 bis 9 einstellt. Als geeignete Säuren werden Alkancarbonsäuren, Maleinsäure, 2,4-Dimethyl-benzoesäure, Fluorkieselsäure, Schwefelsäure und Borsäure genannt. Das Verfahren soll dann entweder zu stabilen Celluloseäther-Lösungen oder -Dispersionen führen.

Aus Ullmanns Encyklopädie der technischen Chemie, 4. Auflage, Band 9, Stichwort »Celluloseäther«, S. 196 (1975) ist weiterhin bekannt, daß Salze einen erheblichen Einfluß auf den Gelpunkt von wäßrigen Celluloseäther-Lösungen ausüben. Mit geringen Konzentrationen von Neutralsalzen sind wäßrige Lösungen von Celluloseäthern verträglich, bei Vorhandensein höherer Konzentrationen an Neutralsalzen kann jedoch die Viskosität erniedrigt werden oder auch Flockung des Celluloseäthers eintreten. Für Methylcellulosen ist dabei bekannt, daß sich die Flockung bei Verdünnung des Systems mit Wasser reversibel wieder auflöst. Bezüglich des Einflusses der jeweiligen Kationen bzw. Anionen des Salzes auf das Lösungsverhalten der Methylcellulosen können zwei Reihen von Ionen in Form einer Hofmeisterschen lyotropen Reihe aufgestellt werden, in den Extremwerten gelten dabei das $Pb^{++}$- bzw. $CN^-$-Ion als stark und das $Na^+$- bzw. $CO_3^{--}$-Ion als schwach beeinflussend. Die Hydroxyäthyl-cellulose gilt als mit Salzlösungen mäßiger Konzentration verträglicher als die Methylcellulosen. Der Vorgang des Flockens ist bei den aufgeführten

2

nichtionogenen Celluloseäthern jedoch keine chemische Umsetzung, wie sie beispielsweise beim Einwirken von Salzen auf die ionogene Carboxymethylcellulose eintreten kann, sondern es handelt sich um eine reversible Dehydratation oder anders bezeichnet auch um eine Elektrolytkoagulation. Diese Beeinflussung des Löslichkeitsverhaltens durch bestimmte Salze führt in der Praxis dazu, daß das Ausflocken des Celluloseäthers beispielsweise durch Einsatz bestimmter wenigempfindlicher Celluloseäther-Typen oder durch Einstellen bestimmter Bedingungen beim Einsatz der Celluloseäther in wäßrigen Systemen möglichst verhindert wird.

In der DE-OS 2 417 086 wird ein Zusatzmittel für Mörtel und Beton aus wasserlöslichen, quellbaren polymeren Stoffen beschrieben, das fein suspendiert entweder in einer wäßrigen Lösung von Salzen oder in einem organischen Lösemittel vorliegt. Dabei sollen die in der wäßrigen Phase gelösten Salze oder das organische Lösemittel ein Auflösen und Quellen der polymeren Stoffe verhindern. Als wasserlösliche, quellbare, polymere Stoffe sind u. a. Derivate der Cellulose wie Methyl-, Hydroxyäthyl-, Hydroxypropyl- und Carboxymethylcellulose, d. h. Celluloseäther aufgeführt. In der Praxis zeigt es sich aber, daß es nicht in allen Fällen möglich ist, stabile Celluloseäther-Suspensionen zu erstellen, ohne daß verhältnismäßig hohe Elektrolytkonzentrationen erzeugt werden müssen. Häufig ist jedoch ein zu hoher Elektrolytgehalt, insbesondere von mehr als etwa 10—12 Gew.-%, in der Elektrolytlösung auf bestimmten Anwendungsgebieten störend, so daß bisher auf diesen Anwendungsgebieten keine stabilen Celluloseäther-Suspensionen eingesetzt werden konnten.

Aufgabe der vorliegenden Erfindung ist es, ein Verfahren zur Herstellung einer auch in niedrigeren Konzentrationsbereichen an Elektrolyt stabilen, wäßrigen, elektrolythaltigen Celluloseäther-Suspension und Verwendungen einer derartigen Suspension aufzuzeigen.

Die Erfindung geht aus von dem bekannten Verfahren zur Herstellung einer stabilen, wäßrigen, elektrolythaltigen Celluloseäther-Suspension durch Zusetzen eines an sich wasserlöslichen Celluloseäthers in fester, kleinteiliger Form zu einer wäßrigen Elektrolytlösung unter gleichmäßiger Verteilung des Celluloseäthers. Das erfindungsgemäße Verfahren ist dadurch gekennzeichnet, daß ein nichtionogener Celluloseäther verwendet und der Suspension Tonerde zugesetzt wird.

In einer bevorzugten Ausführungsform des erfindungsgemäßen Verfahrens wird zusätzlich zur Tonerde noch ein die Suspension stabilisierendes und ihre Viskosität verringerndes organisches Mittel zugesetzt.

Unter wasserlöslichen, nicht-ionogenen Celluloseäthern sind insbesondere Methylcellulose (MC), Alkyl-hydroxyalkylcellulose und Hydroxyalkylcellulose, bevorzugt Methylhydroxyäthylcellulose (MHEC), Methyl-hydroxypropylcellulose (MHPC), Äthyl-hydroxyäthylcellulose (EHEC) und Hydroxyäthylcellulose (HEC) zu verstehen; es sind jedoch auch andere Mischäther verwendbar, sofern sie wasserlöslich sind und einen mindestens überwiegend nichtionogenen Charakter aufweisen. Die erfindungsgemäß verwendeten Celluloseäther sollen an sich wasserlöslich, d. h. in destilliertem Wasser oder Leitungswasser löslich sein; während der Ausführung des erfindungsgemäßen Verfahrens in der wäßrigen Elektrolylösung einschließlich der erfindungsgemäßen weiteren Zusätze sind sie dann jedoch überwiegend, d. h. zu mehr als 75 Gew.-%, oder völlig unlöslich. Die Celluloseäther können vor dem Einsatz im erfindungsgemäßen Verfahren als Pulver, fasrige Ware oder als Granulat vorliegen. Sie sind nicht nur erfindungsgemäß suspendierbar, wenn sie in anquellverzögerter, d. h. in Wasser temporär nicht oder nur wenig quellbarer Form vorliegen, sondern auch dann, wenn sie bezüglich des Anquell-Verhaltens, beispielsweise durch oberflächliche chemische Vernetzung oder eine andersartige Modifizierung, nicht vorbehandelt worden sind.

Die wäßrige Elektrolytlösung wird durch Auflösen von Basen oder Säuren, insbesondere aber von einem oder mehreren Salzen in Wasser erzeugt. Als Salze sind Metall- oder Ammoniumsalze von Mineralsäuren oder organischen Säuren geeignet, insbesondere solche Salze, die als Kation ein Alkalimetall-, Erdalkalimetall-, Erdmetall-, Zink-, Kupfer-, Eisen- oder Manganion und als Anion ein Sulfat-, Carbonat-, Silicat-, Sulfit-, Halogenid-, Phosphat-, Nitrat-, Nitrit-, Acetat-, Formiat-, Tartrat- oder Citration, einschließlich deren Hydrogensalze (z. B. Hydrogencarbonat-Ion) enthalten. Die Konzentration der wäßrigen Elektrolytlösung an Elektrolyt wird so eingestellt, daß sie 4—12 Gew.-% an Elektrolyt gelöst aufweist. Hinsichtlich der oberen Grenze an aufzulösendem Elektrolyt nach dem erfindungsgemäßen Verfahren wird der Gewichtsanteil des Elektrolyten in der Lösung jedoch auch durch das Löslichkeitsprodukt des jeweiligen Elektrolyten bestimmt, so daß es durchaus möglich ist, daß eine Elektrolytkonzentration von 10 Gew.-% bei bestimmten Elektrolyten nicht erreicht werden kann. Bevorzugte Salze für die Erstellung der Elektrolytlösung sind Alkalicarbonate und Alkali-, Erdalkali- und Erdmetallsulfate, besonders bevorzugt werden Alkalicarbonate.

Zweckmäßig wird die jeweilige wäßrige Elektrolytlösung so hergestellt, daß sie eine genügend hohe Konzentration an Elektrolyt aufweist, um das »In-Lösung-Gehen« des Celluloseäthers möglichst zu verhindern. In diesen Elektrolytlösungen lassen sich die Celluloseäther dann zwar suspendieren, es entstehen jedoch keine über einen längeren Zeitraum, insbesondere von mehr als 3 bis 5 Stunden oder von Tagen stabile Suspension, so daß die Celluloseäther mehr oder weniger rasch wieder sedimentieren.

Wird diesen bestenfalls kurzzeitig stabilen Suspensionen aus Elektrolytlösung und Celluloseäther feinteilige Tonerde zugesetzt in einer Menge von 0,1 bis 10 Gew.-%, bevorzugt von 0,5 bis 5 Gew.-% bezogen auf die Menge an Elektrolytlösung, so wird die Stabilität der Celluloseäther-Suspension wesentlich verbessert, d. h. die Suspensionen sind mindestens noch nach etwa 3 bis 5 Stunden, im Regelfall noch nach Tagen, z. T. sogar noch nach einem halben Jahr stabil. Unter feinteiliger Tonerde ist dabei entweder feinteiliges Aluminiumoxid ($Al_2O_3$), insbesondere pyrogenes $Al_2O_3$, in einer der bekannten Modifikationen oder feinteiliges Aluminiumhydroxid (Aluminiumoxidhydrat, Tonerdehydrat) zu verstehen. Selbstverständlich sollen unter dem Begriff Tonerde auch alle bekannten Übergangsformen zwischen Aluminiumoxiden und -hydroxiden, z. B. AlO(OH) ($=Al_2O_3 \cdot H_2O$) verstanden werden. Die Tonerde kann der Elektrolytlösung auch bereits vor Zugabe des Celluloseäthers beigegeben werden.

Zusätzlich kann die Suspension in ihrer Stabilität noch verbessert und in ihrer Viskosität verringert werden. Zu den dazu geeigneten organischen Mitteln zählen einzeln oder im Gemisch bevorzugt Glykole wie Monoethylenglykol, Diethylenglykol, Propylenglykol oder Polyethylenglykol; langkettige einwertige Alkohole wie Oleylalkohol; oxethylierte Alkohole, oxethylierte Amine, oxethylierte Fettsäuren, Propylenoxid-Ethylenoxid-Addukte; und langkettige Fettsäuren wie Oleylsäure, Tallölfettsäure oder Transfettsäure. Diese Mittel werden in einer Menge von 0,05 bis 20 Gew.-%, insbesondere von 0,1 bis 6 Gew.-%, bezogen auf die Menge an Elektrolytlösung, eingesetzt.

Der die Viskosität verringernde Effekt bei guter Stabilisierung der Suspension tritt insbesondere bei Verwendung von Alkalicarbonaten als Elektrolyt auf, wobei in der Regel dann bereits Mengen des organischen Mittels in der Größenordnung von etwa 0,05 bis 3 Gew.-% ausreichend sind.

Die erfindungsgemäß hergestellten Celluloseäther-Suspensionen enthalten 0,5 bis 40 Gew.-%, bevorzugt 5 bis 30 Gew.-%, Celluloseäther bezogen auf die Menge an Elektrolytlösung und zeigen dann eine Viskosität nach Höppler von weniger als 3 Pa · s bei 20° C, bevorzugt werden solche stabilen Suspensionen eingesetzt, die eine Viskosität nach Höppler von weniger als 0,3 Pa ·s bei 20° C zeigen; sie sind nicht oder nur in geringem Maße klebend und können — ohne entscheidende Beeinflussung der Suspendiereigenschaften — übliche Zusätze wie Entschäumungsmittel, Fungizide und Bakterizide, aber auch — unter Berücksichtigung der damit unter Umständen einhergehenden Beeinflussung der Suspension — Netzmittel enthalten.

Die nach dem erfindungsgemäßen Verfahren hergestellten stabilen, wäßrigen, elektrolythaltigen Celluloseäther-Suspensionen sind pumpfähig, enthalten verhältnismäßig große Mengen an Celluloseäther, lassen sich gut dosieren und sind deshalb auf allen Anwendungsgebieten einsetzbar, in denen in vorgelegte Mischungen, insbesondere in wasserhaltige Mischungen, ein Celluloseäther in einer bestimmten Menge eingebracht werden soll. Außerdem kann die Menge an Elektrolyt durch die verhältnismäßig geringe Zusatzmenge der auf den bevorzugten Anwendungsgebieten wenig oder gar nicht störenden Tonerde auf ein vernünftiges Maß verringert werden. Unter den möglichen Anwendungsgebieten sind die folgenden bevorzugt:

Die erfindungsgemäß hergestellten Celluloseäther-Suspensionen können eingebracht in Mischungen auf der Basis von wasserhaltigen Baustoffen dort die · Wirkung der Celluloseäther als Verdickungsmittel, Wasserrückhaltemittel und Haftmittel zur Entfaltung bringen. Zu den Anwendungsgebieten der Baustoffe zählen dabei z. B. Beton, Putz- und Klebemörtel, Spachtelmassen und Vorbehandlungsmittel für Mauerwerk vor dem Verputzen. Unter den wasserhaltigen Baustoffen selbst sind im allgemeinen Gemische aus einem anorganischen Bindemittel, Füll- und Zuschlagstoffen, Wasser und gegebenenfalls einem oder mehreren Hilfsmitteln zu verstehen. Bindemittel sind üblicherweise Zement, Kalk, Gips, gebrannter Magnesit oder Gemische aus zwei oder mehreren von ihnen. Als Füll- und Zuschlagstoffe werden in der Regel körnige anorganische Substanzen verwendet, beispielsweise fein- bis grobkörniger Sand, Silicate auf der Basis von Gesteinsmehl oder Hochofenschlacken, Kalksteinmehl, Kaolin, Kieselgur, Perlit, Bimsstein oder geschäumte Kunststoffkügelchen. Zu den Hilfsmitteln zählen neben den einzusetzenden Celluloseäthern auch Luftporenbildner, Abbindeverzögerer oder -beschleuniger, Antischaummittel, Frostschutzmittel oder die Wasserundurchlässigkeit erhöhende Mittel; diese Hilfsmittel sind für gewisse Anwendungsgebiete (z. B. Leichtbeton oder dünne Schichten von Mörtel) der wasserhaltigen Baustoffe von Vorteil. Bei einigen Anwendungsgebieten wird auch auf den Einsatz von Füll- oder Zuschlagsstoffen verzichtet, dies gilt besonders für Baustoffe aus Gips oder Anhydrit; auch Baustoffe ohne anorganisches Bindemittel, d. h. nicht-abbindende, sondern trocknende Produkte, können Verwendung finden.

Ebenfalls sind die erfindungsgemäß hergestellten Celluloseäther-Suspensionen gut dazu geeignet, in solche Mischungen eingearbeitet zu werden, die als Kunststoffdispersionsfarbe, Kunststoffputz oder Leimfarbe Verwendung finden. Die Celluloseäther werden diesen Farben oder Putzen zugesetzt, um das Wasserrückhaltevermögen, die Verarbeitungseigenschaften und die Haftung zu verbessern. Die Kunststoffdispersionsfarben, Kunststoffputze und Leimfarben sind wäßrige Systeme und werden im allgemeinen in weißer oder abgetönter Form geliefert. Ihre Zusammensetzung kann aus DIN 18 363 »Anstricharbeiten« vom September 1976 entnommen werden: Kunststoffdispersionsfarben enthalten Kunststoffdispersionen, Pigmente (meist weiße Pigmente, wie Titandioxid, Lithophone und Kreide), Füllstoff, z. B. Calciumcarbonate, Quarzmehl, Schwerspat, Faserstoffe, Granulate und Hilfsstoffe, z. B. Fungizide; sie können dünnflüssig oder pastös sein und werden nach ihrer Zusammensetzung in die Gruppen waschbeständig, scheuerbeständig und wetterbeständig eingeteilt. Kunststoffputze unterscheiden sich von den Kunststoffdispersionsfarben durch das Vorhandensein von strukturgebenden Füllstoffen. Leimfarben enthalten Leim, Pigmente (meist weiße) und Füllstoffe, z. B. Faserstoffe.

Zu den Kunststoffdispersionen zählen viele der Dispersionen aus filmbildenden Homo- oder Copolymerisaten aus Acrylsäureestern, Methacrylsäureestern, Acryl- und Methacrylsäure, Styrol, Äthylen, Butadien, Acrylnitril, Vinylacetat, Vinylpropionat, Vinylester von langkettigen verzweigten Carbonsäuren oder Maleinsäureestern. Zu den Leimen gehören allgemein Bindemittel wie wasserlösliche Celluloseäther, Stärke, Dextrin, Pflanzenleime, Knochen- und andere tierische Leime.

Da eine breite Auswahl von Elektrolyten, insbesondere Salzen, und von organischen Mitteln im erfindungsgemäßen Verfahren möglich ist, kann sich der Anwender durch die individuelle Wahl des jeweiligen Elektrolyten auf die vom speziellen Anwendungsgebiet geforderten Anforderungen hinsichtlich Störwirkung, Verträglichkeit oder Fällungsmöglichkeit durch einfache Handversuche einstellen bzw. wird durch Merkblätter darauf vorbereitet.

### Beispiele 1 bis 26

Die jeweiligen Mischungsbestandteile der stabilen, wäßrigen, elektrolythaltigen Celluloseäther-Suspensionen können aus der Tabelle (Beispiel 1 bis 26) entnommen werden. Die erfindungsgemäß hergestellten Suspensionen waren mindestens noch nach etwa 3 bis 5 Stunden, im Regelfall noch nach Tagen, z. T. sogar noch nach einem halben Jahr stabil. Bei der Durchführung wird wie folgt vorgegangen:

Der jeweilige Elektrolyt wird in Wasser gelöst und 1000 g der Elektrolytlösung wird die feinteilige Tonerde entweder in Form von pyrogenem $Al_2O_3$ ($>97\%$ $Al_2O_3$, $<0,1\%$ $TiO_2$, $<0,1\%$ $SiO_2$, $<0,2\%$ $Fe_2O_3$, $<0,5\%$ HCl) oder Tonerdegel Typ 1 (ca. 45% $Al_2O_3$, ca. 11% $SO_3$, $<0,2\%$ $SiO_2$, ca. 0,05% $Fe_2O_3$, ca. 10% $H_2O$) oder Tonerdegel Typ 2 (ca. 45% $Al_2O_3$, ca. 12% $SO_3$, ca. 0,2% $SiO_2$, ca. 0,04% $Fe_2O_3$, ca. 18% $H_2O$) zugesetzt und darin durch Rühren gleichmäßig verteilt. Daran anschließend wird ein pulverförmiger Celluloseäther zugesetzt und ebenfalls im vorliegenden Medium gleichmäßig verteilt. Abschließend wird — dies jedoch nicht in allen Beispielen — das die Suspension stabilisierende und ihre Viskosität verringernde organische Mittel zugesetzt und durch starkes Rühren ebenfalls gleichmäßig in der Suspension verteilt. Die Reihenfolge der Zugabe von Tonerde, Celluloseäther und gegebenenfalls organischem Mittel kann auch verändert werden, ohne daß sich die Stabilität der Suspension wesentlich verändert.

Die so entstandenen stabilen Suspensionen können als niedrigviskose (d. h. mit einer Viskosität nach Höppler von kleiner als etwa 300 cP = 0,3 Pa · s bei 20°C) oder mittelviskose (d. h. mit einer Viskosität nach Höppler von kleiner als etwa 3000 cP = 3 Pa · s bei 20°C) Mischungen bezeichnet werden. Niedrigviskose Mischungen ergeben die Beispiele 1, 5 bis 19 und 21 bis 26 und mittelviskose Mischungen die Beispiele 2 bis 4 und 20.

Die in der 6. Spalte der Tabelle angegebenen Viskositätswerte sind nach Höppler in 2%iger wäßriger Lösung bei 20°C gemessene Werte in Pa · s.

### Vergleichsbeispiele V 1 bis V 6 (siehe Tabelle)

Zum Vergleich wurden Mischungen (stabile Dispersionen) mit hohem Gehalt an Elektrolyt (V 1 – V 4) und Mischungen (instabile Dispersionen) mit niedrigem Gehalt an Elektrolyt (V 5 und V 6), aber vergleichbar mit den erfindungsgemäß eingesetzten Elektrolytlösungen, erzeugt. Die hohen Elektrolytgehalte ergeben zwar stabile Dispersionen, der Elektrolytgehalt kann jedoch auf bestimmten Anwendungsgebieten störend sein, die niedrigeren Elektrolytgehalte ohne den erfindungsgemäßen Zusatz ergeben keine stabilen Dispersionen. Die Mischungen sind jeweils mittelviskos.

Tabelle

| Bei-spiel Nr. | Art des Elektrolyten | Konzen-tration des Elektrolyten (Gew.-%) | Art und Anteil (Gew.-%) der Tonerde in der Suspension*) | Art und Anteil (Gew.-%) des organischen Mittels in der Suspension*) | Art des Cellulose-äthers mit Sub-stitutionsgrad und Viskosität | Anteil des Cellulose-äthers (Gew.-%) in der Sus-pension*) |
|---|---|---|---|---|---|---|
| 1 | $K_2CO_3$ | 10 | $Al_2O_3$, 1 | Ölsäure, 0,1 | MHEC DS: 1,4–2,0 MS: 0,1–0,3 30 Pa·s | 20 |
| 2 | $K_2CO_3$ | 10 | $Al_2O_3$, 1 | – | desgl. | 20 |
| 3 | $K_2CO_3$ | 10 | Gel 1, 2 | – | desgl. | 20 |
| 4 | $K_2CO_3$ | 10 | Gel 2, 2 | – | desgl. | 20 |
| 5 | $K_2CO_3$ | 10 | Gel 1, 2 | Ölsäure, 0,1 | desgl. | 20 |
| 6 | $K_2CO_3$ | 10 | Gel 2, 2 | desgl. | desgl. | 20 |
| 7 | $K_2CO_3$ | 10 | $Al_2O_3$, 1 | Oleylalkohol, 0,8 | desgl. | 20 |
| 8 | $K_2CO_3$ | 10 | Gel 1, 2 | PyO/AeO-Addukt mit 20 Mol-% Aeo, 0,25**) | desgl. | 20 |
| 9 | $K_2CO_3$ | 10 | Gel 2, 2 | Tributylphenol + 8 Mol-% AeO, 0,15 | desgl. | 20 |
| 10 | $K_2CO_3$ | 9 | Gel 1, 3 | Monoethylen-glykol, 4,0 | MHEC wie vorher | 20 |
| 11 | $K_2CO_3$ | 10 | Gel 2, 3 | PyO/AeO-Addukt mit 40 Mol-% AeO, 1,0 | EHEC DS ≧ 0,9 MS ≧ 0,8 30 Pa·s | 25 |
| 12 | $K_2CO_3$ | 10 | $Al_2O_3$, 2 | Ölsäure + 15 Mol-% AeO, 0,25 | MHEC wie vorher | 20 |
| 13 | $K_2CO_3$ | 10 | Gel 1, 2,5 | Oleylamin + 10 Mol-% AeO, 0,2 | desgl. | 20 |
| 14 | $K_2CO_3$ | 9 | Gel 2, 2,5 | Isotridecyl-alkohol + 8 Mol-% AeO, 0,1 | desgl. | 20 |
| 15 | $K_2CO_3$ | 10 | $Al_2O_3$, 1,5 | Diethylen-glykol, 5,0 | desgl. | 20 |
| 16 | $K_2CO_3$ | 9 | Gel 1, 3 | Polyethylen-glykol, 5,0 | desgl. | 20 |
| 17 | $K_2CO_3$ | 9 | Gel 2, 4 | Oleylalkohol, 1,0 | MHEC DS: 1,4–2,0 MS: 0,1–0,3 3 Pa·s | 20 |

Fortsetzung

| Bei-spiel Nr. | Art des Elektrolyten | Konzen-tration des Elektrolyten (Gew.-%) | Art und Anteil (Gew.-%) der Tonerde in der Suspension*) | Art und Anteil (Gew.-%) des organischen Mittels in der Suspension*) | Art des Cellulose-äthers mit Sub-stitutionsgrad und Viskosität | Anteil des Cellulose-äthers (Gew.-%) in der Sus-pension*) |
|---|---|---|---|---|---|---|
| 18 | K$_2$CO$_3$ | 10 | Al$_2$O$_3$, 1,25 | Tranfettsäure, 0,25 | MHEC DS: 1,3−1,6 MS: 0,1−0,3 6 Pa·s | 20 |
| 19 | MgSO$_4$ sicc. | 9 | Gel 1, 3,0 | Oleylalkohol, 1,0 | MHEC DS: 1,4−2,0 MS: 0,1−0,3 10 Pa·s | 20 |
| 20 | MgSO$_4$ sicc. | 9 | Gel 1, 3,0 | − | desgl. | 20 |
| 21 | MgSO$_4$ sicc. | 9 | Gel 2, 3,0 | Isotridecyl-alkohol + 8 Mol-% AeO, 0,25 | desgl. | 20 |
| 22 | MgSO$_4$ sicc. | 9 | Al$_2$O$_3$, 1,5 | Monoethylen-glykol, 5,0 | wie vorher, aber 30 Pa·s | 20 |
| 23 | MgSO$_4$ sicc. | 9 | Gel 1, 3,0 | Butylglykol, 5,0 | wie vorher, 30 Pa·s | 20 |
| 24 | MgSO$_4$ sicc. | 9 | Gel 2, 2,0 | Oleylalkohol, 1,0 | MHPC DS: 1,3−1,6 MS: 0,2−0,4 0,2 Pa·s | 20 |
| 25 | MgSO$_4$ sicc. | 9 | Al$_2$O$_3$, 1,5 | Monoethylen-glykol, 2,0 | wie vorher, 3 Pa·s | 20 |
| 26 | MgSO$_4$ sicc. | 9 | Gel 1, 2,5 | Ölsäure + 5% Ricinusöl + 32 Mol-% AeO, 1,0 | MHEC DS: 1,3−1,6 MS: 0,1−0,3 6 Pa·s | 20 |
| V 1 | K$_2$CO$_3$ | 28 | − | − | MHEC DS: 1,3−2,0 MS: 0,1−0,3 30 Pa·s | 25 |
| V 2 | K$_2$CO$_3$ | 20 | − | − | desgl. | 25 |
| V 3 | MgSO$_4$ sicc. | 16 | − | − | desgl. | 20 |
| V 4 | MgSO$_4$ sicc. | 24 | − | − | desgl. | 20 |
| V 5 | K$_2$CO$_3$ | 10 | − | − | desgl. | 20 |
| V 6 | MgSO$_4$ sicc. | 9 | − | − | desgl. | 20 |

*) Der Anteil ist bezogen auf die Menge an Elektrolyt.
**) PyO = Propylenoxid.
  AeO = Ethylenoxid.

0 003 582

## Patentansprüche

1. Verfahren zur Herstellung einer stabilen, wäßrigen elektrolythaltigen Celluloseether-Suspension durch Zusetzen eines an sich wasserlöslichen Celluloseethers in fester, kleinteiliger Form zu einer wäßrigen Elektrolytlösung unter gleichmäßiger Verteilung des Celluloseethers, dadurch gekennzeichnet, daß ein nichtionogener Celluloseether verwendet und der Suspension Tonerde zugesetzt wird, in einer Menge, daß die Suspension, bezogen auf die Menge an Elektrolytlösung, 4 bis 12 Gew.-% Elektrolyt, 0,5 bis 40 Gew.-% Celluloseether und 0,1 bis 10 Gew.-% Tonerde enthält.

2. Verfahren nach Anspruch 1, dadurch gekennzeichnet, daß zusätzlich zur Tonerde noch ein die Suspension stabilisierendes und ihre Viskosität verringerndes organisches Mittel zugesetzt wird, in einer Menge, daß die Suspension, bezogen auf die Menge an Elektrolytlösung 0,05—20 Gew.-% organisches Mittel enthält.

3. Verfahren nach Anspruch 1 oder 2, dadurch gekennzeichnet, daß der Celluloseether eine Methylcellulose, eine Alkyl-hydroxyalkyl-cellulose oder eine Hydroxyalkylcellulose ist.

4. Verfahren nach einem der Ansprüche 1 bis 3, dadurch gekennzeichnet, daß als Elektrolyt Alkalicarbonate, Alkali-, Erdalkali- oder Erdmetallsulfate verwendet werden.

5. Verwendung der gemäß einem der Ansprüche 1 bis 4 hergestellten stabilen, wäßrigen, elektrolythaltigen Celluloseether-Suspension zur Herstellung von Celluloseether enthaltenden Mischungen.

6. Verwendung nach Anspruch 5 zur Herstellung einer Celluloseether enthaltenden Mischung auf der Basis von wasserhaltigen Baustoffen.

7. Verwendung nach Anspruch 5 zur Herstellung einer Celluloseether enthaltenden Kunststoffdispersionsfarbe, eines Kunststoffputzes oder einer Leimfarbe.

## Claims

1. Process for the preparation of a stable aqueous electrolyte-containing cellulose ether suspension, wherein an inherently water-soluble cellulose ether is added, in the form of solid particles, to an aqueous solution of an electrolyte and uniformly distributed therein, characterized in that a non-ionogenic cellulose ether is used and that aluminum oxide is added to the suspension in a quantity, that the suspension contains 4 to 12 per cent by weight of electrolyte, 0.5 to 40 per cent by weight of cellulose ether, and 0.1 to 10 per cent by weight of aluminum oxide, calculated on the quantity of the electrolyte solution.

2. Process according to claim 1, characterized in that, besides aluminum oxide, an organic substance is added which stabilizes the suspension and reduces its viscosity, in a quantity, that the suspension contains 0.05 to 20 per cent by weight of the organic substance, calculated on the quantity of the electrolyte solution.

3. Process according to claim 1 or claim 2, characterized in that the cellulose ether is a methyl cellulose, an alkyl hydroxyalkyl cellulose, or a hydroxyalkyl cellulose.

4. Process according to any one of claims 1 to 3, characterized in that alkali carbonates, alkali sulfates, alkaline earth sulfates, or earth metal sulfates are used as the electrolyte.

5. Use of the stable, aqueous, electrolyte-containing cellulose ether suspension according to any one of claims 1 to 4 for the preparation of mixtures containing cellulose ethers.

6. Use according to claim 5 for the preparation of mixtures containing cellulose ethers, which mixtures are based on aqueous building materials.

7. Use according to claim 5 for the preparation of a plastics dispersion paint, a plastics-based plaster, or a distemper paint containing cellulose ethers.

## Revendications de brevet

1. Procédé pour la préparation d'une suspension aqueuse stable d'éther de cellulose, contenant de l'électrolyte, par l'addition d'un éther de cellulose hydrosoluble en soi, sous forme solide finement divisée à une solution aqueuse d'électrolyte en répartissant de façon homogène l'éther de cellulose, caractérisé en ce que l'on emploie un éther de cellulose non ionogène et en ce que l'on ajoute à la suspension de l'alumine, en une quantité telle que la suspension contient par rapport à la quantité de solution d'électrolyte, entre 4 et 12% en poids d'électrolyte, entre 0,5 et 40% en poids d'éther de cellulose et entre 0,1 et 10% en poids d'alumine.

2. Procédé selon la revendication 1, caractérisé en ce qu'en outre de l'alumine, on ajoute aussi un agent organique stabilisant la suspension et réduisant sa viscosité, en une quantité telle que la suspension contient, par rapport à la quantité de solution d'électrolyte, entre 0,05 et 20% en poids d'agent organique.

3. Procédé selon la revendication 1 ou 2, caractérisé en ce que l'éther de cellulose est une méthylcellulose, une alkylhydroxyalkylcellulose ou une hydroxyalkylcellulose.

8

4. Procédé selon l'une des revendications 1 à 3, caractérisé en ce que l'on emploie comme électrolyte des carbonates alcalins et des sulfates alcalins, alcalinoterreux ou de métaux terreux.

5. Utilisation d'une suspension d'éther de cellulose aqueuse stable contenant de l'électroylte préparée selon l'une des revendications 1 à 4, pour la préparation de mélanges contenant de l'éther de cellulose.

6. Utilisation selon la revendication 5 pour la préparation d'un mélange contenant un éther de cellulose à base de matériaux de construction contenant de l'eau.

7. Utilisation selon la revendication 5 pour la préparation d'une peinture à base d'une dispersion de matière synthétique contenant de l'éther de cellulose, d'un enduit à base de matière synthétique ou d'une peinture à base de colle.